# EUROPÄISCHE PATENTSCHRIFT

(11) **EP 2 987 889 B1**
(45) Veröffentlichungstag und Bekanntmachung des Hinweises auf die Patenterteilung: **01.04.2020**
(21) Anmeldenummer: 14181621.5
(22) Anmeldetag: 20.08.2014
(51) Int. Cl.: C23C 2/02, C23C 2/12, C23C 2/40

(54) **Oberflächenveredeltes Stahlblech und Verfahren zu dessen Herstellung**
Surface finished steel sheet and method for the production thereof
Tôle d'acier avec surface finie et son procédé de fabrication

(43) Veröffentlichungstag der Anmeldung: 24.02.2016
(73) Patentinhaber: ThyssenKrupp Steel Europe AG, 47166 Duisburg (DE); thyssenkrupp AG, 45143 Essen (DE)
(72) Erfinder: Kuhn, Patrick, 44141 Dortmund (DE); Norden, Martin, 45134 Essen (DE); Schrooten, Axel, 44137 Dortmund (DE)
(74) Vertreter: Cohausz & Florack

(56) Entgegenhaltungen:
- US-A- 4 891 274
- CHENG W-J ET AL: "Effect of nickel pre-plating on high-temperature oxidation behavior of hot-dipped aluminide mild steel", MATERIALS CHARACTERIZATION, Bd. 82, 21. Mai 2013 (2013-05-21), Seiten 58-65, XP028576376, ELSEVIER, NEW YORK, NY [US] ISSN: 1044-5803, DOI: 10.1016/J.MATCHAR.2013.05.007
- CHENG W-J ET AL: "Characterization of intermetallic layer formation in aluminide/nickel duplex coating on mild steel", MATERIALS CHARACTERIZATION, Bd. 69, 16. April 2012 (2012-04-16), Seiten 63-70, XP028517886, ELSEVIER, NEW YORK, NY [US] ISSN: 1044-5803, DOI: 10.1016/J.MATCHAR.2012.04.007 [gefunden am 2012-04-16]
- WANG C ET AL: "Improving Corrosion Resistance of the Hot-Dip Aluminum Coating on 22MnB5 Steel Surface", ADVANCED MATERIALS RESEARCH, Bd. 581-582, 22. Oktober 2012 (2012-10-22) , Seiten 410-413, XP055165678, Trans Tech Publications [CH] ISSN: 1662-8985, DOI: 10.4028/www.scientific.net/AMR.581-582.410

## Beschreibung

Die Erfindung betrifft ein oberflächenveredeltes Stahlblech, vorzugsweise kaltgewalztes Stahlfeinblech, mit einer metallischen Korrosionsschutzschicht, die eine Oberfläche des oberflächenveredelten Stahlblechs definiert und unter anderem Aluminium und Eisen enthält, wobei der Aluminiumgehalt der Korrosionsschutzschicht mehr als 40 Gew.-%, vorzugsweise mehr als 45 Gew.-%, besonders bevorzugt mehr als 50 Gew.-% beträgt, wobei die metallische Korrosionsschutzschicht zudem Nickel enthält, und wobei nickelhaltige Phasen am Übergang der Korrosionsschutzschicht zu dem Grundwerkstoff des Stahlblechs ausgebildet sind. Des Weiteren betrifft die Erfindung ein Verfahren zum Herstellen eines durch eine metallische Korrosionsschutzschicht oberflächenveredelten Stahlblechs, bei dem ein Flachstahlprodukt, vorzugsweise kaltgewalztes Stahlfeinblech, durch Schmelztauchbeschichten mit Aluminium oder einer auf Aluminium basierenden Legierung beschichtet wird, wobei das Flachstahlprodukt vor dem Schmelztauchbeschichten zunächst mit einer Nickelschicht versehen wird.

Aufgrund schlechter Korrosionsbeständigkeit werden unbeschichtete Kohlenstoffstähle, insbesondere auch borlegierte Vergütungsstähle, mit einem metallischen Korrosionsschutz versehen. Dies erfolgt im Stand der Technik üblicherweise durch Schmelztauchbeschichten mit Zink oder Aluminium basierten Metallschmelzen. Feuerverzinktes Stahlfeinblech verbindet die hervorragende Korrosionsbeständigkeit des Zinks mit der Festigkeit von Stahl. Feueraluminiertes Stahlfeinblech verbindet eine hervorragende Korrosionsbeständigkeit mit thermischer Belastbarkeit. Als weiterer Vorteil kommt die Kombination des optischen Erscheinungsbildes von Aluminium mit der Festigkeit von Stahl hinzu. Bekannt ist insbesondere Feinstahlblech, das durch Schmelztauchbeschichten mit einem Aluminium-Silizium-Überzug versehen ist.

Schmelztauchveredeltes Stahlfeinblech wird insbesondere im Automobilbau verwendet, wobei durch Umformen von aus dem Feinblech zugeschnittenen Platinen dreidimensional geformte Karosserie- sowie Fahrwerksteile hergestellt werden.

Zur Verringerung des Fahrzeuggewichts bzw. des Kraftstoffverbrauchs werden zunehmend Vergütungsstähle verwendet, die sich durch eine gute Umformbarkeit im erwärmten Zustand und nach dem Warmumformen mit rascher Abkühlung (Presshärten) durch eine besonders hohe Festigkeit auszeichnen. Ein bekannter Vergütungsstahl ist die Stahlsorte 22MnB5. Die hervorragenden Festigkeitseigenschaften dieser Stahlsorte werden neben dem Kohlenstoff und dem Mangan insbesondere durch einen geringen Anteil an Bor erreicht.

Bekannte Aluminium-Silizium-Überzüge, wie sie vielfach in der Warmumformung Anwendung finden, besitzen jedoch den Nachteil, dass sie nur eingeschränkt für die Kaltumformung geeignet sind. Daher kommen diese Überzüge nicht in Frage, wenn zum Beispiel eine vorgeschaltete Kaltumformung vor einer Warmumformanwendung gefordert wird. Denn es hat sich gezeigt, dass es beim Kaltumformen von Stahlblech mit diesen Überzügen zu Abplatzungen des Überzugs in den umformbeanspruchten Bereichen des Bauteils kommt und der Korrosionsschutz an den abgeplatzten Stellen verloren geht.

US 4 891 274 A offenbart die Feueraluminierung von mit Ni vorbeschichteten kaltgewalzten Blechen (Ni-Schichtdicke max. 0,22 µm).

Cheng W-J et al. offenbart in "Effect of nickel pre-plating on high-temperature oxidation behavior of hotdipped aluminide mild steel"(MATERIALS CHARACTERIZATION, Bd. 82, (2013-05-21), S. 58-65) und in "Characterization of intermetallic layer formation in aluminide/nickel duplex coating on mild steel" (MATERIALS CHARACTERIZATION, Bd. 69, (2012-04-16), S. 63-70) die Feueraluminierung eines mit Ni vorbeschichteten Stahls (Ni-Schichtdicke um die 30 µm).

Wang C. et al. offenbart in "Improving Corrosion Resistance of the Hot-Dip Aluminum Coating on 22MnB5 Steel Surface" (ADVANCED MATERIALS RESEARCH, Bd. 581-582, (2012-10-22), Seiten 410-413) die Feueraluminierung von 22MnB5-Stählen.

Davon ausgehend liegt der Erfindung die Aufgabe zugrunde, ein Stahlblech der eingangs genannten Art zu schaffen, dessen Korrosionsschutzschicht eine gute Umformbarkeit, insbesondere Kaltumformbarkeit ermöglicht und eine deutlich verbesserte Haftung beim Umformen aufweist. Vorzugsweise soll ein solches Stahlblech auch für das Warmumformen (Presshärten) geeignet sein.

Gelöst wird diese Aufgabe durch ein oberflächenveredeltes Stahlblech mit den im Anspruch 1 angegebenen Merkmalen sowie durch ein Verfahren zum Herstellen eines oberflächenveredelten Stahlblechs mit den im Anspruch 9 angegebenen Merkmalen.

Bevorzugte und vorteilhafte Ausgestaltungen des erfindungsgemäßen Stahlblechs bzw. des Verfahrens zu dessen Herstellung sind in den Unteransprüchen angegeben.

Das erfindungsgemäße Stahlblech ist mit einer metallischen Korrosionsschutzschicht versehen, die Aluminium, Nickel und Eisen enthält, wobei der Aluminiumgehalt der Korrosionsschutzschicht mehr als 40 Gew.-%, vorzugsweise mehr als 45 Gew.-%, besonders bevorzugt mehr als 50 Gew.-% beträgt, während der Nickelgehalt der Korrosionsschutzschicht im Bereich von 10 bis 30 Gew.-% liegt, und wobei nickelhaltige Phasen am Übergang der Korrosionsschutzschicht zu dem Grundwerkstoff des Stahlblechs ausgebildet sind.

Das erfindungsgemäße Verfahren ist dementsprechend dadurch gekennzeichnet, dass das betreffende Flachstahlprodukt, vorzugsweise kaltgewalzte Stahlfeinblech vor dem Schmelztauchbeschichten zunächst mit einer Nickelschicht versehen wird.

Betriebsinterne Versuche seitens der Anmelderin haben ergeben, dass die erfindungsgemäße Korrosionsschutzschicht eine deutlich erhöhte Duktilität und Haftung beim Kaltumformen gegenüber den bekannten Aluminium- und Aluminium-Silizium-Schmelztauchüberzügen aufweist. Insbesondere haben die Versuche ergeben, dass Stahlblech aus borlegiertem Vergütungsstahl mit einer erfindungsgemäßen Korrosionsschutzschicht auch für das Warmumformen (Presshärten) geeignet ist. Das Aufbringen der Nickelschicht erfolgt vorzugsweise mittels eines elektrolytischen Beschichtungsprozesses.

Der Beschichtungsprozess, vorzugsweise elektrolytische Beschichtungsprozess zur Vorbeschichtung des Flachstahlprodukts bzw. kaltgewalzten Stahlfeinblechs mit Nickel wird so ausgeführt, dass die dadurch aufgebrachte Nickelschicht eine Schichtdicke im Bereich von 1 bis 5 µm, vorzugsweise im Bereich von 3 bis 5 µm aufweist. Hierdurch lässt sich die Duktilität und Haftung der erfindungsgemäßen Korrosionsschutzschicht optimieren.

Das anschließende Schmelztauchbeschichten wird so durchgeführt, dass die resultierende Aluminium, Eisen und Nickel enthaltende Korrosionsschutzschicht eine Schichtdicke im Bereich von 8 bis 15 µm, vorzugsweise im Bereich von 10 bis 15 µm, besonders bevorzugt im Bereich von 10 bis 12 µm aufweist. Hierdurch lässt sich auf wirtschaftliche Weise ein sehr zuverlässiger Korrosionsschutz mit optimaler Haftung der Korrosionsschutzschicht bei Kaltumformung des beschichteten Flachstahlproduktes erzielen.

Nach einer Ausgestaltung des erfindungsgemäßen Verfahrens lässt sich die Nickelschicht zuverlässig und wirtschaftlich auf das Flachstahlprodukt bzw. kaltgewalzte Stahlfeinblech aufbringen, indem für den elektrolytischen Beschichtungsprozess ein Nickelelektrolyt verwendet wird, der auf Nickelsulfat und Nickelchlorid basiert.

Eine weitere vorteilhafte Ausgestaltung des erfindungsgemäßen Verfahrens ist dadurch gekennzeichnet, dass das mit der Nickelschicht versehene Flachstahlprodukt vor dem Schmelztauchbeschichten einer rekristallisierenden Glühbehandlung unter Schutzgas unterzogen wird. Hierdurch wird die Umformbarkeit, insbesondere die Kaltumformbarkeit des Flachstahlproduktes verbessert. Die rekristallisierende Glühbehandlung umfasst ein Halten auf einer bestimmten Temperatur für eine bestimmte Zeitdauer und ein gesteuertes Abkühlen nach Erreichen der gewünschten Eigenschaften. Vorzugsweise wird das mit der Nickelschicht versehene, geglühte Flachstahlprodukt auf eine Temperatur abgekühlt, die oberhalb der Temperatur des Schmelzbades liegt und nicht mehr als 20°C von dieser abweicht. Das Abkühlen des geglühten Flachstahlproduktes erfolgt mit einer bestimmten Geschwindigkeit, sodass die erreichten Eigenschaften nicht negativ beeinträchtigt werden. Durch das Glühen in Schutzgas wird verhindert, dass das mit der Nickelschicht versehene Flachstahlprodukt vor dem Schmelztauchbeschichten oxidiert oder dass andere unerwünschte Oberflächenreaktionen erfolgen.

Zum Schmelztauchbeschichten wird in dem erfindungsgemäßen Verfahren ein Schmelzbad verwendet, welches vorzugsweise bis auf unvermeidbare Verunreinigungen eine reine Aluminiumschmelze enthält. Alternativ kann in dem erfindungsgemäßen Verfahren aber auch ein Schmelzbad verwendet werden, welches eine Aluminiumschmelze mit bis zu 10 Gew.-% Silizium enthält. Versuche seitens der Anmelderin haben allerdings ergeben, dass die erfindungsgemäße Korrosionsschutzschicht bei Verwendung einer im Wesentlichen reinen Aluminiumschmelze eine optimale Haftung beim Kaltumformen aufweist.

Wenn das auf den elektrolytischen Beschichtungsprozess zum Aufbringen einer Nickelschicht folgende Schmelztauchbeschichten unter Verwendung einer Silizium enthaltenen Aluminiumschmelze durchgeführt wird, so werden die Verfahrensparameter vorzugsweise so eingestellt, dass die metallische Korrosionsschutzschicht des entsprechend oberflächenveredelten Stahlblechs einen Si-Gehalt von weniger als 8 Gew.-%, vorzugsweise weniger 5 Gew.-% aufweist.

Durch die Vorbeschichtung in Form der elektrolytisch aufgebrachten Nickelschicht wird die Diffusion von Eisen aus dem Stahlblech (Flachstahlprodukt) in das durch Schmelztauchbeschichten aufgebrachte Aluminium unterdrückt. Vorzugsweise werden die Verfahrensparameter so eingestellt, dass in der äußeren Schichthälfte der metallischen Korrosionsschutzschicht des entsprechend oberflächenveredelten Stahlblechs der Nickelgehalt größer als der Eisengehalt ist.

Ferner werden die Verfahrensparameter vorzugsweise so eingestellt, dass in der erfindungsgemäßen Korrosionsschutzschicht intermetallische AlNi-Phasen entstehen bzw. ausgebildet werden.

Als Grundwerkstoff zur Herstellung des erfindungsgemäßen Stahlblechs wird vorzugsweise ein presshärtbarer Stahl verwendet, z.B. Stahl der Sorte 22MnB5.

Nachfolgend wird die Erfindung anhand von Ausführungsbeispielen unter Bezugnahme auf die beiliegenden Abbildungen näher erläutert. Es zeigen:
- Abb. 1: ein mittels Glimmentladungsspektroskopie (GDOES) ermitteltes Elementtiefenprofil eines erfindungsgemäß beschichteten Stahlblechs; und
- Abb. 2: kaltgezogene Näpfchen, wobei das linke Näpfchen aus einem einen herkömmlichen AlSi-Überzug aufweisenden Stahlblech und das rechte Näpfchen aus einem einen erfindungsgemäßen Al-Ni-Überzug aufweisenden Stahlblech erzeugt wurde.

Zur Herstellung eines durch eine metallische Korrosionsschutzschicht oberflächenveredelten Stahlblechs wurde kaltgewalztes Feinblechband, das eine Blechdicke von ca. 1,25 mm aufwies, in einem kontinuierlichen elektrolytischen Beschichtungsprozess mit einer ca. 3 µm dicken Nickelschicht bzw. in einer Variante mit einer ca. 1 µm dicken Nickelschicht versehen. Hierzu wurde jeweils ein sogenannter Watt'scher Nickelelektrolyt, basierend auf Nickelsulfat und Nickelchlorid verwendet. Dieser Beschichtungsprozess kann auch als elektrogalvanischer Beschichtungsprozess bezeichnet werden. Als kaltgewalztes Feinblechband wurde jeweils ein Stahlband (Grundmaterial) der Sorte 22MnB5 verwendet.

Anschließend wurde das elektrolytisch mit Nickel beschichtete Feinblechband einer Glühbehandlung in einer kontinuierlich arbeitenden Schmelztauchbeschichtungsanlage zugeführt. In dem dem Beschichtungsbad vorgeschalteten Durchlaufofen der Schmelztauchbeschichtungsanlage wurde das mit Nickel vorbeschichtete Feinblechband unter Schutzgas- bzw. Formiergasatmosphäre (ca. 95% Stickstoff, 5% Wasserstoff, Taupunkt -30°C) rekristallisierend geglüht. Nach einer Haltezeit von 60 Sekunden bei einer Temperatur von ca. 800°C wurde das geglühte Feinblechband auf eine Badeintauchtemperatur von ca. 705°C abgekühlt und anschließend durch das Beschichtungsbad geführt. Das Beschichtungsbad bestand in einer bevorzugten Variante im Wesentlichen aus reinem schmelzflüssigem Aluminium. In einer weiteren Variante wurde ein Beschichtungsbad verwendet, welches aus einer Aluminiumschmelze mit ca. 10 Gew.-% Silizium bestand. Die Schichtdicke des so aufgebrachten Aluminiumüberzuges bzw. AlSi-Überzuges wurde mittels oberhalb des Beschichtungsbades angeordneter Abstreifdüsen so eingestellt, dass die aus der Nickelschicht und dem Schmelztauchüberzug gebildete metallische Korrosionsschutzschicht eine Schichtdicke von ca. 10 µm aufwies. Diese metallische Korrosionsschutzschicht kann auch als Aluminium-Nickel-Legierungsschicht bezeichnet werden.

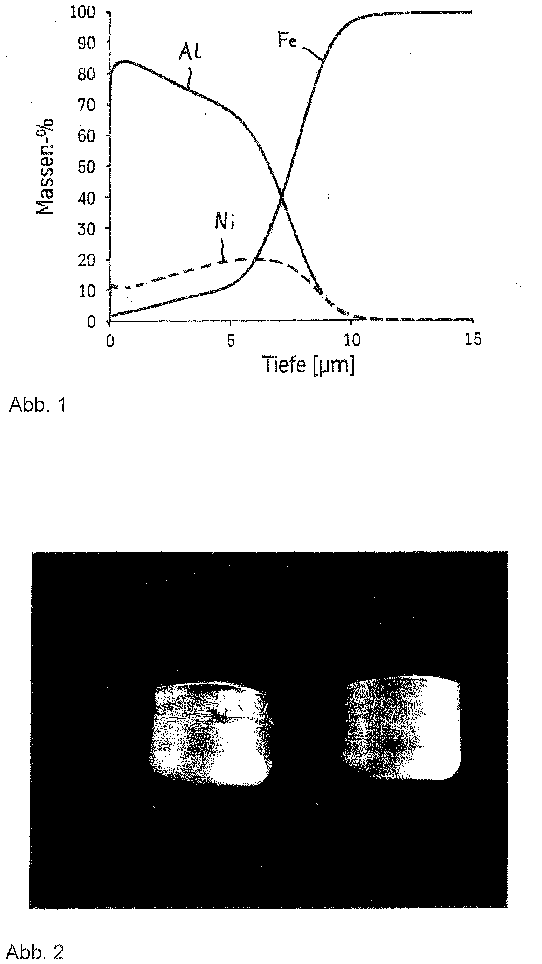

In Abb. 1 ist die Zusammensetzung einer erfindungsgemäßen nach dem Schmelztauchbeschichtungsprozess erhaltenen Korrosionsschutzschicht eines vorvernickelten Stahlblechs anhand eines Elementtiefenprofils dargestellt. Die gestrichelte Linie zeigt den Nickelgehalt in Gew.-% relativ zur Tiefe der metallischen Korrosionsschutzschicht. Die links unten beginnende, bis nahe an 100 Gew.-% ansteigende Linie gibt den Fe-Gehalt der Korrosionsschutzschicht relativ zu deren Tiefe an, während die dritte Linie den Al-Gehalt betrifft.

Es ist zu erkennen, dass in diesem Beispiel der Nickelgehalt nahe der Oberfläche der Korrosionsschutzschicht im Bereich von 10 bis 12 Gew.-% liegt. In Richtung des kaltgewalzten Feinblechs nimmt der Nickelgehalt der ca. 10 µm dicken Korrosionsschutzschicht bis zu einer Tiefe von ca. 6 µm auf ca. 19 bis 20 Gew.-% zu. Danach fällt der Nickelgehalt der Korrosionsschutzschicht in Richtung des beschichteten Feinblechs allmählich ab.

Der Aluminiumgehalt der Korrosionsschutzschicht weist nahe ihrer Oberfläche sein Maximum auf. Das Maximum des Al-Gehalts liegt bei diesem Beispiel im Bereich von ca. 82 bis 86 Gew.-%. Durch die Nickelbeschichtung (Nickel-Vorbeschichtung) wurde der Eisengehalt im Aluminium unterdrückt, wodurch der Überzug eine deutlich geringere Sprödigkeit bzw. deutlich höhere Duktilität als der bekannte AlSi-Überzug aufweist. In Abb. 1 ist zu erkennen, dass in der äußeren Schichthälfte der Korrosionsschutzschicht der Nickelgehalt deutlich größer als der Eisengehalt ist.

Zur Bewertung des Umformvermögens der erfindungsgemäßen Korrosionsschutzschicht wurden entsprechend beschichtete, kaltgewalzte Stahlfeinbleche der Sorte 22MnB5 kaltumgeformt, und zwar durch Tiefziehen in Rundnäpfe, und die Überzugshaftung anhand des Erscheinungsbildes der Korrosionsschutzschicht mit demjenigen eines bekannten Al-Si-Schmelztauchüberzuges (als Referenz) sowie eines bekannten Al- Schmelztauchüberzuges verglichen (siehe Tabelle). Zudem wurde die Probenherstellung variiert, indem unterschiedlich dicke Nickelschichten hergestellt wurden bzw. auch Proben ohne Nickel-Vorbeschichtung untersucht wurden.

Die Tabelle zeigt, dass durch eine ausreichend dicke Nickelschicht die Duktilität und Haftung des Überzuges (Korrosionsschutzschicht) beim Kaltumformen gegenüber den bekannten AISi- und Al-Schmelztauchüberzügen (Proben 1 und 4) deutlich gesteigert werden kann. Die Fotoaufnahmen in Abb. 2 verdeutlichen dies nochmals.

Das linke Näpfchen in Abb. 2 wurde durch Kalttiefziehen eines einen herkömmlichen AlSi-Überzug aufweisenden Stahlfeinblechs hergestellt. Das rechte Näpfchen wurde dagegen durch Kalttiefziehen eines einen erfindungsgemäßen Al-Ni-Überzug aufweisenden Stahlfeinblechs hergestellt. Während das linke Näpfchen deutliche Abplatzungen des AlSi-Überzuges im umformungsbeanspruchten Bereich des Näpfchens aufweist, lassen sich an dem rechten Näpfchen keine Abplatzungen feststellen.

Die erfindungsgemäße Korrosionsschutzschicht zeichnet sich also durch eine deutlich erhöhte Duktilität und gleichzeitig durch eine deutlich verbesserte Haftung bei der Kaltumformung aus. Auch besitzt die erfindungsgemäße Korrosionsschutzschicht weiterhin die Eigenschaft des Zunderschutzes, welche der bekannte AlSi-Überzug für die Warmumformung bietet. Die erfindungsgemäße Korrosionsschutzschicht eignet sich somit ebenfalls für die Warmumformung. Die Vorteile der vorliegenden Erfindung lassen sich insbesondere auch bei der Herstellung von Bauteilen durch Rollprofilieren und anschließendes Härten nutzen.

**Tabelle: Vergleich der Überzugshaftung / Kaltumformbarkeit**

| Probe Nr. | Überzugsbezeichnung | Herstellung | Überzugshaftung | gemäß Erfindung |
|---|---|---|---|---|
| 1 | AlSi (Referenz) | Al-Schmelze mit 10 Gew.-% Si | Schlecht, deutliche Abplatzungen | nein |
| 2 | AlNi | 3 µm Ni-Vorbeschichtung schmelztauchbeschichtet mit reinem Aluminium | Sehr gut, keine abgeplatzten Stellen | ja |
| 3 | AlNi | 1 µm Ni-Vorbeschichtung schmelztauchbeschichtet mit reinem Aluminium | Gut, jedoch leichte Abplatzungen erkennbar | ja |
| 4 | AlFe | ohne Ni-Vorbeschichtung schmelztauchbeschichtet mit reinem Aluminium | Schlecht, deutliche Abplatzungen erkennbar | nein |
| 5 | AlSiNi | 3 µm Ni-Vorbeschichtung schmelztauchbeschichtet mit AlSi | Gut, jedoch leichte Abplatzungen erkennbar | ja |

## Patentansprüche

1. Oberflächenveredeltes Stahlblech, vorzugsweise kaltgewalztes Stahlfeinblech, mit einer metallischen Korrosionsschutzschicht, die eine Oberfläche des oberflächenveredelten Stahlblechs definiert und unter anderem Aluminium und Eisen enthält, wobei der Aluminiumgehalt der Korrosionsschutzschicht mehr als 40 Gew.-%, vorzugsweise mehr als 45 Gew.-%, besonders bevorzugt mehr als 50 Gew.-% beträgt, wobei die metallische Korrosionsschutzschicht zudem Nickel enthält, und wobei nickelhaltige Phasen am Übergang der Korrosionsschutzschicht zu dem Grundwerkstoff des Stahlblechs ausgebildet sind, **dadurch gekennzeichnet, dass** der Nickelgehalt der Korrosionsschutzschicht im Bereich von 10 bis 30 Gew.-%, liegt, und dass die metallische Korrosionsschutzschicht eine Dicke im Bereich von 8 bis 15 µm aufweist.

2. Oberflächenveredeltes Stahlblech nach Anspruch 1, **dadurch gekennzeichnet, dass** die metallische Korrosionsschutzschicht außer Nickel, Eisen und Aluminium auch Silizium enthält.

3. Oberflächenveredeltes Stahlblech nach Anspruch 1 oder 2, **dadurch gekennzeichnet, dass** der Si-Gehalt der metallischen Korrosionsschutzschicht weniger als 8 Gew.-%, vorzugsweise weniger 5 Gew.-% beträgt.

4. Oberflächenveredeltes Stahlblech nach einem der Ansprüche 1 bis 3, **dadurch gekennzeichnet, dass** in der äußeren Schichthälfte der metallischen Korrosionsschutzschicht der Nickelgehalt größer als der Eisengehalt ist.

5. Oberflächenveredeltes Stahlblech nach einem der Ansprüche 1 bis 4, **dadurch gekennzeichnet, dass** dessen Grundwerkstoff ein kaltgewalztes Stahlfeinblech ist.

6. Oberflächenveredeltes Stahlblech nach einem der Ansprüche 1 bis 5, **dadurch gekennzeichnet, dass** dessen Grundwerkstoff ein presshärtbarer Stahl ist.

7. Oberflächenveredeltes Stahlblech nach einem der Ansprüche 1 bis 6, **dadurch gekennzeichnet, dass** in der metallischen Korrosionsschutzschicht intermetallische AlNi-Phasen ausgebildet sind.

8. Oberflächenveredeltes Stahlblech nach einem der Ansprüche 1 bis 7, **dadurch gekennzeichnet, dass** die metallische Korrosionsschutzschicht eine Dicke im Bereich von 10 bis 15 µm aufweist.

9. Verfahren zum Herstellen eines durch eine metallische Korrosionsschutzschicht oberflächenveredelten Stahlblechs, bei dem ein Flachstahlprodukt, vorzugsweise kaltgewalztes Stahlfeinblech, durch Schmelztauchbeschichten mit Aluminium oder einer auf Aluminium basierenden Legierung beschichtet wird, wobei das Flachstahlprodukt vor dem Schmelztauchbeschichten zunächst mit einer Nickelschicht versehen wird, **dadurch gekennzeichnet, dass** der Beschichtungsprozess zum Aufbringen der Nickelschicht so ausgeführt wird, dass die dadurch aufgebrachte Nickelschicht eine Schichtdicke im Bereich von 1 bis 5 µm aufweist, und dass das Schmelztauchbeschichten so durchgeführt wird, dass die resultierende, Aluminium, Eisen und Nickel enthaltende Korrosionsschutzschicht eine Schichtdicke im Bereich von 8 bis 15 µm aufweist.

10. Verfahren nach Anspruch 9, **dadurch gekennzeichnet, dass** der Beschichtungsprozess zum Aufbringen der Nickelschicht so ausgeführt wird, dass die dadurch aufgebrachte Nickelschicht eine Schichtdicke im Bereich von 3 bis 5 µm aufweist.

11. Verfahren nach Anspruch 9 oder 10, **dadurch gekennzeichnet, dass** die Nickelschicht mittels eines elektrolytischen Beschichtungsprozesses aufgebracht wird.

12. Verfahren nach Anspruch 11, **dadurch gekennzeichnet, dass** für den elektrolytischen Beschichtungsprozess ein Nickelelektrolyt verwendet wird, der auf Nickelsulfat und Nickelchlorid basiert.

13. Verfahren nach einem der Ansprüche 9 bis 12, **dadurch gekennzeichnet, dass** das mit der Nickelschicht versehene Flachstahlprodukt vor dem Schmelztauchbeschichten einer rekristallisierenden Glühbehandlung unter Schutzgas unterzogen wird.

14. Verfahren nach einem der Ansprüche 9 bis 13, **dadurch gekennzeichnet, dass** das Schmelztauchbeschichten so durchgeführt wird, dass die resultierende, Aluminium, Eisen und Nickel enthaltende Korrosionsschutzschicht eine Schichtdicke im Bereich von 10 bis 15 µm aufweist.

15. Verfahren nach einem der Ansprüche 9 bis 14, **dadurch gekennzeichnet, dass** zum Schmelztauchbeschichten ein Schmelzbad verwendet wird, das bis auf unvermeidbare Verunreinigungen eine reine Aluminiumschmelze enthält.

16. Verfahren nach einem der Ansprüche 9 bis 14, **dadurch gekennzeichnet, dass** zum Schmelztauchbeschichten ein Schmelzbad verwendet wird, das eine Aluminiumschmelze mit bis zu 10 Gew.-% Silizium enthält.

## Claims

1. Surface-finished steel sheet, preferably cold-rolled thin steel sheet, having a metallic corrosion-resistant layer which defines a surface of the surface-finished steel sheet and contains, inter alia, aluminium and iron, wherein the aluminium content of the corrosion-resistant layer is more than 40 wt%, preferably more than 45 wt%, particularly preferably more than 50 wt%, wherein the metallic corrosion-resistant layer additionally contains nickel, and wherein nickel-containing phases are formed at the transition of the corrosion-resistant layer to the base material of the steel sheet, **characterised in that** the nickel content of the corrosion-resistant layer is in the range from 10 to 30 wt%, and that the metallic corrosion-resistant layer has a thickness in the range from 8 to 15 µm.

2. Surface-finished steel sheet according to claim 1, **characterised in that** the metallic corrosion-resistant layer also contains silicon in addition to nickel, iron and aluminium.

3. Surface-finished steel sheet according to claim 1 or 2, **characterised in that** the Si content of the metallic corrosion-resistant layer is less than 8 wt%, preferably less than 5 wt%.

4. Surface-finished steel sheet according to one of claims 1 to 3, **characterised in that** in the outer half of the metallic corrosion-resistant layer the nickel content is greater than the iron content.

5. Surface-finished steel sheet according to one of claims 1 to 4, **characterised in that** its base material is a cold-rolled thin steel sheet.

6. Surface-finished steel sheet according to one of claims 1 to 5, **characterised in that** its base material is a press-hardenable steel.

7. Surface-finished steel sheet according to one of claims 1 to 6, **characterised in that** intermetallic AINi phases are formed in the metallic corrosion-resistant layer.

8. Surface-finished steel sheet according to one of claims 1 to 7, **characterised in that** the metallic corrosion-resistant layer has a thickness in the range from 10 to 15 µm.

9. Method for producing a steel sheet surface-finished by a metallic corrosion-resistant layer, in which a flat steel product, preferably cold-rolled thin steel sheet, is hot-dip coated with aluminium or an aluminium-based alloy, wherein the flat steel product is first provided with a nickel layer before hot-dip coating, **characterised in that** the coating operation for applying the nickel layer is performed such that the nickel layer applied thereby has a layer thickness in the range from 1 to 5 µm, and **in that** the hot-dip coating is carried out in such a way that the resulting corrosion-resistant layer containing aluminium, iron and nickel has a layer thickness in the range from 8 to 15 µm.

10. Method according to claim 9, **characterised in that** the coating operation for applying the nickel layer is performed such that the nickel layer applied thereby has a layer thickness in the range from 3 to 5 µm.

11. Method according to claim 9 or 10, **characterised in that** the nickel layer is applied by means of an electrolytic coating operation.

12. Method according to claim 11, **characterised in that** a nickel electrolyte based on nickel sulphate and nickel chloride is used for the electrolytic coating operation.

13. Method according to one of claims 9 to 12, **characterised in that** the flat steel product provided with the nickel layer is subjected to a recrystallizing annealing treatment under inert gas before hot-dip coating.

14. Method according to one of claims 9 to 13, **characterised in that** the hot-dip coating is carried out in such a way that the resulting corrosion-resistant layer comprising aluminium, iron and nickel has a layer thickness in the range from 10 to 15 µm.

15. Method according to one of claims 9 to 14, **characterised in that** a melt bath is used for the hot-dip coating which contains a pure aluminium melt, apart from unavoidable impurities.

16. Method according to one of claims 9 to 14, **characterised in that** a melt bath is used for the hot-dip coating which contains an aluminium melt with up to 10 wt% of silicon.

## Revendications

1. Tôle d'acier traitée pour une finition de surface, de préférence tôle mince en acier, laminée à froid, ladite tôle comprenant une couche de protection métallique contre la corrosion, couche qui définit une surface de la tôle d'acier traitée pour une finition de surface et qui, entre autres métaux, contient de l'aluminium et du fer, où la teneur en aluminium de la couche de protection contre la corrosion est de plus de 40 % en poids, de préférence de plus de 45 % en poids, de façon particulièrement préférable de plus de 50 % en poids, où la couche de protection métallique contre la corrosion contient en outre du nickel, et où des phases contenant du nickel sont formées à la transition de la couche de protection contre la corrosion au matériau de base de la tôle d'acier, **caractérisée en ce que** la teneur en nickel de la couche de protection contre la corrosion se situe dans la plage allant de 10 % en poids à 30 % en poids, et **en ce que** la couche de protection métallique contre la corrosion présente une épaisseur se situant dans la plage allant de 8 µm à 15 µm.

2. Tôle d'acier traitée pour une finition de surface selon la revendication 1, **caractérisée en ce que** la couche de protection métallique contre la corrosion, en dehors du nickel, du fer et de l'aluminium, contient également du silicium.

3. Tôle d'acier traitée pour une finition de surface selon la revendication 1 ou 2, **caractérisée en ce que** la teneur en Si de la couche de protection métallique contre la corrosion est inférieure à 8 % en poids, de préférence inférieure à 5 % en poids.

4. Tôle d'acier traitée pour une finition de surface selon l'une quelconque des revendications 1 à 3, **caractérisée en ce que** la teneur en nickel est supérieure à la teneur en fer dans la moitié de couche extérieure de la couche de protection métallique contre la corrosion.

5. Tôle d'acier traitée pour une finition de surface selon l'une quelconque des revendications 1 à 4, **caractérisée en ce que** le matériau de base de ladite tôle d'acier est une tôle mince en acier, laminée à froid.

6. Tôle d'acier traitée pour une finition de surface selon l'une quelconque des revendications 1 à 5, **caractérisée en ce que** le matériau de base de ladite tôle d'acier est un acier pouvant être durci à la presse.

7. Tôle d'acier traitée pour une finition de surface selon l'une quelconque des revendications 1 à 6, **caractérisée en ce que** des phases intermétalliques de type AlNi sont formées dans la couche de protection métallique contre la corrosion.

8. Tôle d'acier traitée pour une finition de surface selon l'une quelconque des revendications 1 à 7, **caractérisée en ce que** la couche de protection métallique contre la corrosion présente une épaisseur se situant dans la plage allant de 10 µm à 15 µm.

9. Procédé de fabrication d'une tôle d'acier traitée pour une finition de surface, en utilisant une couche de protection métallique contre la corrosion, procédé au cours duquel un produit en acier plat - de préférence une tôle mince en acier, laminée à froid - est recouvert d'aluminium ou d'un alliage à base d'aluminium, en mettant en œuvre un processus de revêtement réalisé par immersion dans un bain de fusion, où le produit en acier plat, avant le processus de revêtement réalisé par immersion dans un bain de fusion, est doté d'abord d'une couche de nickel, **caractérisé en ce que** le processus de revêtement utilisé pour l'application de la couche de nickel est réalisé de manière telle, que la couche de nickel appliquée de cette façon présente une épaisseur de couche se situant dans la plage allant de 1 µm à 5 µm, et **en ce que** le processus de revêtement par immersion dans un bain de fusion est réalisé de manière telle, que la couche de protection contre la corrosion, qui en résulte et qui contient de l'aluminium, du fer et du nickel, présente une épaisseur de couche se situant dans la plage allant de 8 µm à 15 µm.

10. Procédé selon la revendication 9, **caractérisé en ce que** le processus de revêtement servant l'application de la couche de nickel est réalisé de manière telle, que la couche de nickel appliquée de cette façon présente une épaisseur de couche se situant dans la plage allant de 3 µm à 5 µm.

11. Procédé selon la revendication 9 ou 10, **caractérisé en ce que** la couche de nickel est appliquée au moyen d'un processus de revêtement électrolytique.

12. Procédé selon la revendication 11, **caractérisé en ce qu'**un électrolyte de nickel est utilisé pour le processus de revêtement électrolytique, lequel électrolyte de nickel est à base de sulfate de nickel et de chlorure de nickel.

13. Procédé selon l'une quelconque des revendications 9 à 12, **caractérisé en ce que** le produit en acier plat doté de la couche de nickel est soumis, avant la mise en œuvre du processus de revêtement par immersion dans un bain de fusion, à un traitement de recuit recristallisant effectué sous gaz protecteur.

14. Procédé selon l'une quelconque des revendications 9 à 13, **caractérisé en ce que** le processus de revêtement par immersion dans un bain de fusion est réalisé de manière telle, que la couche de protection contre la corrosion, qui en résulte et qui contient de l'aluminium, du fer et du nickel, présente une épaisseur de couche se situant dans la plage allant de 10 µm à 15 µm.

15. Procédé selon l'une quelconque des revendications 9 à 14, **caractérisé en ce qu'**un bain de fusion est utilisé pour le processus de revêtement par immersion dans un bain de fusion, lequel bain de fusion contient, à l'exception d'impuretés inévitables, un aluminium pur en fusion.

16. Procédé selon l'une quelconque des revendications 9 à 14, **caractérisé en ce qu'**un bain de fusion est utilisé pour le processus de revêtement par immersion dans un bain de fusion, lequel bain de fusion contient un aluminium en fusion ayant jusqu'à 10 % en poids de silicium.
